# EUROPEAN PATENT APPLICATION

(11) **EP 4 417 101 A1**
(43) Date of publication of application: **21.08.2024**
(21) Application number: 23825599.6
(22) Date of filing: 07.06.2023
(51) Int. Cl.: A47L 11/40, D06F 33/74

(54) **CLEANING DEVICE CONTROL METHOD AND APPARATUS, AND CLEANING DEVICE**

(30) Priority: 30.12.2022 CN 202211731988
(71) Applicant: Wuxi Little Swan Electric Co., Ltd., Wuxi, Jiangsu 214028 (CN)
(72) Inventor: ZHANG, Zhiwei, Wuxi, Jiangsu 214028 (CN); JIANG, Jiawei, Wuxi, Jiangsu 214028 (CN); DING, Jianglong, Wuxi, Jiangsu 214028 (CN); LI, Houshang, Wuxi, Jiangsu 214028 (CN)
(74) Representative: RGTH
(86) International application number: PCT/CN2023/098998
(87) International publication number: WO 2024/139062

(57) **Abstract**

A control method and control apparatus of a cleaning device, and a cleaning device are provided. The cleaning device includes a first device and a second device, one of the first device and the second device is a floor cleaning device, and another one of the first device and the second device is a clothes treatment device. The control method of the cleaning device includes acquiring an operation request of the first device; acquiring an operation state of the second device; determining that an operation corresponding to the operation state of the second device and an operation corresponding to the operation request of the first device are interference operations; and controlling the floor cleaning device to operate. The technical solution of the present disclosure avoids the problem that the first device and the second device interfere with each other when the first device and the second device simultaneously perform interference operations, and improves the operation efficiency of the cleaning device.

## Description

This application claims priority to Chinese Patent Application No. 202211731988. X, titled "CONTROL METHOD AND CONTROL APPARATUS OF CLEANING DEVICE, AND CLEANING DEVICE," and filed with China National Intellectual Property Administration on December 30, 2022, the entire contents of which are incorporated herein by reference.

### FIELD

The present disclosure relates to the technical field of cleaning devices, and more particularly, to a control method and control apparatus of a cleaning device, and a cleaning device.

### BACKGROUND

With the improvement of people's living standards and the development of household appliance production technology, there are more cleaning devices in houses. However, the space in which the cleaning devices are placed at home is usually limited, so it is possible to integrate two cleaning devices having the same or different operations, thereby saving space.

In the related art, there may be a case where a plurality of cleaning devices operates simultaneously. However, if the operations performed simultaneously by two cleaning devices interfere with each other, the two cleaning devices influence each other when operating simultaneously.

### SUMMARY

### (1) Technical Problem to be Solved

The technical problem to be solved by the present disclosure is to solve the problem of two existing cleaning devices interfering with each other when operating simultaneously.

### (2) Technical Solutions

In order to solve the above technical problems, embodiments of the present disclosure provide a control method and control apparatus of a cleaning device, and a cleaning device, which can avoid interference between a first device and a second device when the first device and the second device perform interference operations simultaneously, and also avoid operation efficiency a floor cleaning device from being reduced due to an excessive waiting time, thereby improving the operation efficiency of the cleaning device.

In a first aspect, embodiments of the disclosure provide a control method of a cleaning device. The cleaning device comprises a first device and a second device, one of the first device and the second device is a floor cleaning device, and another one of the first device and the second device is a clothes treatment device. The control method comprises acquiring an operation request of the first device, acquiring an operation state of the second device, determining that an operation corresponding to the operation state of the second device and an operation corresponding to the operation request of the first device are interference operations, and controlling the floor cleaning device to operate.

In an embodiment, the first device is a floor cleaning device, and the second device is a clothes treatment device. Said controlling the floor cleaning device to operate comprises: controlling the clothes treatment device to suspend performing the operation corresponding to the operation state, and controlling the floor cleaning device to perform the operation corresponding to the operation request; and controlling, subsequent to the floor cleaning device completing the operation corresponding to the operation request, the clothes treatment device to continue to perform the operation corresponding to the operation state.

In an embodiment, the second device is a floor cleaning device, and the first device is a clothes treatment device. Said controlling the floor cleaning device to operate comprises: controlling the floor cleaning device to continue performing the operation corresponding to the operation state; and controlling, subsequent to controlling the floor cleaning device to complete the operation corresponding to the operation state, the clothes treatment device to perform the operation corresponding to the operation request.

In an embodiment, said determining that the operation corresponding to the operation state of the second device and the operation corresponding to the operation request of the first device are interference operations comprises determining that a total operation power of an operation power corresponding to the operation request and an operation power corresponding to the operation state is greater than a predetermined power.

In an embodiment, said determining that the operation corresponding to the operation state of the second device and the operation corresponding to the operation request of the first device are interference operations comprises determining that an operation stage corresponding to the operation state of the second device and an operation stage corresponding to the operation request of the first device are interference operation stages.

In an embodiment, the first device is the floor cleaning device and the second device is the clothes treatment device, wherein the operation stage corresponding to the operation request of the first device is a charging stage, and the operation stage corresponding to the operation request of the second device is a spin-drying stage. In another embodiment, the second device is the floor cleaning device and the first device is the clothes treatment device, wherein the operation stage corresponding to the operation request of the first device is a spin-drying stage, and the operation stage corresponding to the operation request of the second device is a charging stage.

In an embodiment, the operation stage corresponding to the operation request of the first device and the operation stage corresponding to the operation request of the second device are both heating stages.

In a second aspect, embodiments of the present disclosure also provide a control apparatus of a cleaning device. The cleaning device comprises a first device and a second device, one of the first device and the second device is a floor cleaning device, and another one of the first device and the second device is a clothes treatment device. The control apparatus comprises a first acquisition module, a second acquisition module, a determining module, and a control module. The first acquisition module is configured to acquire an operation request of the first device. The second acquisition module is configured to acquire an operation state of the second device. The determining module is configured to determine whether an operation corresponding to the operation state of the second device and an operation corresponding to the operation request of the first device are interference operations. The control module is configured to control the floor cleaning device to operate, in response to the operation corresponding to the operation state of the second device and the operation corresponding to the operation request of the first device being the interference operations.

In a third aspect, embodiments of the present disclosure provide a computer-readable storage medium having programs or instructions stored thereon. The programs or instructions cause a computer to perform the control method of any one of the cleaning devices provided in the first aspect.

In a fourth aspect, embodiments of the present disclosure provide a cleaning device comprising a processor and a memory. The processor is configured to perform, when invoking programs or instructions stored in the memory, the control method of the cleaning device provided in the first aspect.

### (3) Beneficial Effects

The technical solutions provided by the embodiments of the present disclosure have the following advantages as compared to the related art.

The embodiments of the present disclosure provide a cleaning device comprising a first device and a second device. One of the first device and the second device is a floor cleaning device, and another one of the first device and the second device is a clothes treatment device. A control method of the cleaning device comprises: acquiring an operation request of the first device; acquiring an operation state of the second device; determining that an operation corresponding to the operation state of the second device and an operation corresponding to the operation request of the first device are interference operations; and controlling the floor cleaning device to operate. Accordingly, the present disclosure provides that one of the first device and the second device is a floor cleaning device, and another one of the first device and the second device is a clothes treatment device. The floor cleaning device is controlled to operate, in response to the operation corresponding to the operation state of the second device and the operation corresponding to the operation request of the first device being the interference operations, so as to avoid the problem that the operation process of the clothes treatment device and the operation process of the floor cleaning device interfere with each other when the clothes treatment device and the floor cleaning device simultaneously perform the interference operations, thereby improving the operation efficiency of the cleaning device.

It is to be understood that the foregoing general description and the following detailed description are both exemplary and explanatory only and are not intended to limit the present disclosure thereto.

### BRIEF DESCRIPTION OF THE DRAWINGS

The accompanying drawings are incorporated in and constitute a part of this description, illustrate embodiments of the present disclosure, and serve to explain the principles of the present disclosure along with the description.

In order to explain the embodiments of the present disclosure or the technical solutions in the related art more clearly, the following will briefly introduce the drawings used in the description of the embodiments and the related art. Those skilled in the art can acquire other drawings based on these drawings without involving creative efforts.
FIG. 1 is a schematic flowchart of a control method of a cleaning device according to an embodiment of the present disclosure.
FIG. 2 is a front view of a cleaning device according to an embodiment of the present disclosure.
FIG. 3 is a schematic detailed flowchart of a control method of a cleaning device according to an embodiment of the present disclosure.
FIG. 4 is a schematic detailed flowchart of a control method of another cleaning device according to an embodiment of the present disclosure.
FIG. 5 is a schematic diagram showing a structure of a control apparatus of a cleaning device according to an embodiment of the present disclosure.
FIG. 6 is a schematic diagram showing a structure of a cleaning device according to an embodiment of the present disclosure.

### DETAILED DESCRIPTION

To make the objects, technical solutions, and advantages of the embodiments of the present disclosure clearer, the technical solutions in the embodiments of the present disclosure will be clearly and completely described below. Obviously, the described embodiments are only some of the embodiments of the present disclosure, rather than all of the embodiments. Based on the embodiments of the present disclosure, all other embodiments obtained by those skilled in the art without involving any inventive efforts fall within the scope of the present disclosure.

In the related art, when two cleaning devices having the same or different operations are integrally provided, simultaneous operations may occur. If the simultaneous operations of the two cleaning devices interfere with each other, the two cleaning devices may influence each other while simultaneously operating, thereby reducing the operation efficiency of the cleaning devices.

In order to solve the above problems, embodiments of the present disclosure provide a control method of a cleaning device. The control method may be performed by a first device, and the first device is configured to acquire an operation request of the first device and acquire an operation state of a second device. In another embodiment, the control method may be performed by a second device, and the second device is configured to acquire an operation request of a first device and acquire an operation state of the second device. In a further embodiment, the control method may be performed by a control apparatus, such as an intelligent terminal, which is independent of the first device and the second device. The intelligent terminal is configured to acquire an operation request of the first device and acquire an operation state of the second device.

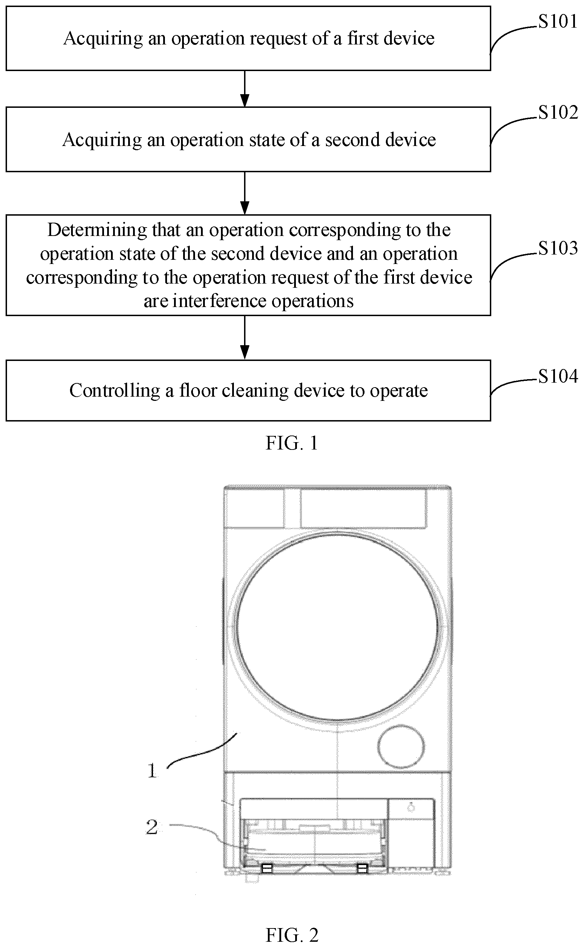

FIG. 1 is a schematic flowchart of a control method of a cleaning device according to an embodiment of the present disclosure. The control method of the cleaning device may be applied to an application scenario requiring to control the cleaning device. The control method may be performed by a control apparatus of the cleaning device provided by the embodiments of the present disclosure, and the control apparatus of the cleaning device may be implemented by software and/or hardware. The control apparatus of the cleaning device may be integrated into the first device, the second device, or the intelligent terminal. As shown in FIG. 1, the control method comprises operations at block S101, block S102, block S103, and block S104.

At block S101, an operation request of the first device is acquired. The cleaning device comprises the first device and the second device, and one of the first device and the second device is a floor cleaning device.

In an exemplary embodiment of the present disclosure, when the first device needs to operate, the operation request of the first device may be sent, for example, by the first device or by an intelligent terminal communicatively connected to the first device. The embodiment of the present disclosure does not limit the sending device of the operation request of the first device.

At block S102, an operation state of the second device is acquired.

FIG. 2 is a front view of a cleaning device according to an embodiment of the present disclosure. FIG. 2 exemplarily shows that one of the first device and the second device is a floor cleaning device 2, and another one of the first device and the second device is a clothes treatment device 1. The floor cleaning device 2 is disposed below the clothes treatment device 1, and a space below the clothes treatment device 1 is configured to provide a floor space for the floor cleaning device 2, to avoid an additional space occupied by the floor cleaning device 2. In addition, the first device and the second device may be separately arranged, which is not limited by the embodiments of the present disclosure.

In an embodiment, the first device and the second device are both devices having cleaning requirements, the first device may be provided as, for example, a floor cleaning device, and the second device may be provided as, for example, a clothes treatment device. In another embodiment, the first device may be provided as, for example, a clothes treatment device, and the second device may be provided as, for example, a floor cleaning device, which are not limited by the embodiments of the present disclosure. When the second device is operating, the operation state of the second device may be sent, for example, by the second device or by an intelligent terminal communicatively connected to the second device. The embodiment of the present disclosure does not limit the sending manner of the operation state of the second device.

At block S 103, an operation corresponding to the operation state of the second device and an operation corresponding to the operation request of the first device are determined to be interference operations.

In some embodiments, if the first device needs to operate, the operation corresponding to the operation state of the second device and the operation corresponding to the operation request of the first device can be acquired, and it can be determined whether the operations of the two devices interfere with each other. In an embodiment, when the first device is a floor cleaning device and the second device is a clothes treatment device, cleaning members of the floor cleaning device become soiled after the floor cleaning device cleans the floor, and the floor cleaning device returns to a base station to clean the cleaning members of the floor cleaning device. In order to quickly dry the cleaned cleaning members, it is required to perform heating and drying operations in the base station. If the clothes treatment device is also performing heating and drying operations at this moment, the heating and drying operations of the clothes treatment device and the drying operation of the base station require a power supply with a high power, and the power supply power at home cannot satisfy the scenario that the clothes treatment device performs the heating and drying operations and the base station performs the drying operation simultaneously. Therefore, high-power operations (such as, the drying and heating operations) performed by the clothes treatment device and the floor cleaning device are set as interference operations.

It should be noted that the specific type of the interference operations may be set based on actual usage of the cleaning device. For example, a spin-drying operation of the clothes treatment device and a charging operation of the floor cleaning device may be interference operations, which will not be limited by the embodiments of the present disclosure.

At block S 104, the floor cleaning device is controlled to operate.

In some embodiments, when the operation corresponding to the operation state of the second device and the operation corresponding to the operation request of the first device are interference operations. If the first device and the second device are set to operate simultaneously, the operation of the first device and the operation of the second device may affect each other. For example, the first device needs to be charged, and the second device is spin-drying. In this case, the simultaneous operations of the first device and the second device may result in poor contact at charging contacts when the first device is charged, resulting in reducing the charging efficiency of the first device caused by a charging terminal.

The operation time of the floor cleaning device is shorter than the operation time of the clothes treatment device. Accordingly, if the floor cleaning device is suspended performing the operation due to the operation request of the clothes treatment device, or the floor cleaning device cannot be responded in time when it is required to operate, the floor cleaning device performs an operation again until the clothes treatment device completes an operation thereof, which may prolong the waiting time of the floor cleaning device. If the floor cleaning device has a subsequent operation, the operation efficiency of the floor cleaning device will be reduced. Therefore, controlling the floor cleaning device to operate can shorten the waiting time of the floor cleaning device, improve the operation efficiency of the floor cleaning device, and avoid the problem that the operation process of the clothes treatment device and the operation process of the floor cleaning device interfere with each other when the clothes treatment device and the floor cleaning device simultaneously perform interference operations.

In another exemplary embodiment of the present disclosure, the first device is a floor cleaning device, and the second device is a clothes treatment device. The controlling the floor cleaning device to operate comprises: controlling the clothes treatment device to suspend performing the operation corresponding to the operation state, and controlling the floor cleaning device to perform the operation corresponding to the operation request; and controlling, subsequent to the floor cleaning device completing the operation corresponding to the operation request, the clothes treatment device to continue to perform the operation corresponding to the operation state.

In an exemplary embodiment of the present disclosure, when the clothes treatment device is operating and the floor cleaning device needs to operate, the operation corresponding to the operation state of the clothes treatment device and the operation corresponding to the operation request of the floor cleaning device are interference operations. In this embodiment, the clothes treatment device can be controlled to suspend performing the operation, and the floor cleaning device can be controlled to operate. Thereafter the clothes treatment device can be controlled to operate after the operation of the floor cleaning device has been completed.

Therefore, the floor cleaning device can operate without waiting for a long operation time for the clothes treatment device to finish its operation, such that the waiting time of the floor cleaning device can be shortened. Since the operation time of the floor cleaning device is short, and the clothes treatment device is controlled to operate after the operation of the floor cleaning device has been completed, the clothes treatment device does not have to wait for too long time. In this way, the control of the cleaning device is more flexible, and the operation efficiency of the cleaning device is improved.

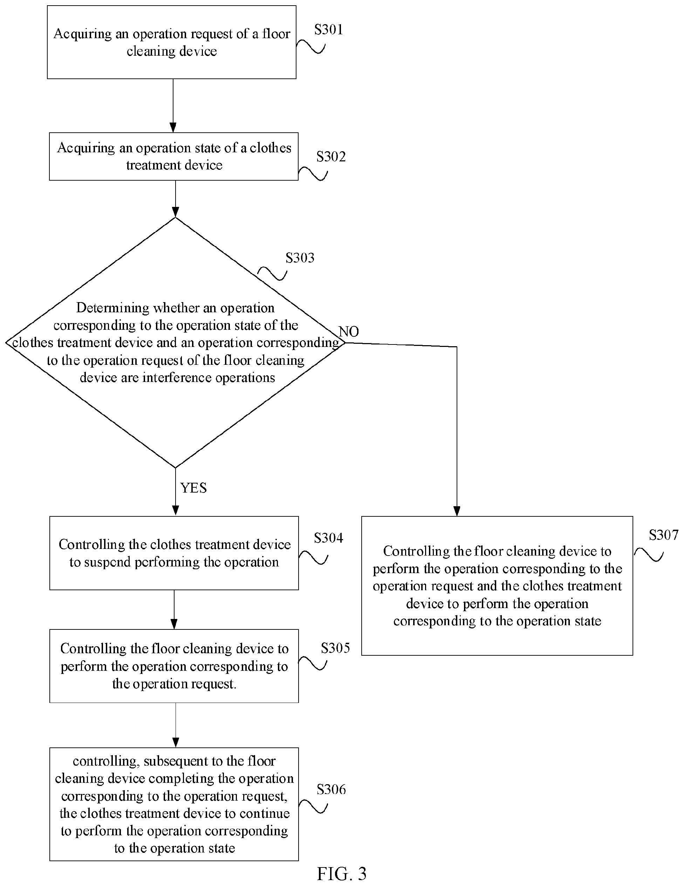

FIG. 3 is a detailed flowchart of a control method of a cleaning device according to an embodiment of the present disclosure. As shown in FIG. 3, the control method of the cleaning device comprises operations at blocks S301 to S307.

At block S301, an operation request of a floor cleaning device is acquired.

At block S302, an operation state of a clothes treatment device is acquired.

At block S303, it is determined whether an operation corresponding to the operation state of the floor cleaning device and an operation corresponding to the operation request of the clothes treatment device are interference operations. If it is, an operation at block S304 is performed, and if not, an operation at block S307 is performed.

At block S304, the clothes treatment device is controlled to suspend performing the operation.

At block S305, the floor cleaning device is controlled to perform the operation corresponding to the operation request.

At block S306, the clothes treatment device is controlled, subsequent to the floor cleaning device completing the operation corresponding to the operation request, to continue to perform the operation corresponding to the operation state.

At block S307, the floor cleaning device is controlled to perform the operation corresponding to the operation request, and the clothes treatment device is controlled to perform the operation corresponding to the operation state.

It should to be noted that when the operation corresponding to the operation state of the second device and the operation corresponding to the operation request of the first device are not interference operations, the operation at block S307 may be performed correspondingly, or the process may be performed in accordance with a predetermined procedure of the cleaning device, which will not be limited herein by the embodiments of the present disclosure.

In another exemplary embodiment of the present disclosure, the second device is a floor cleaning device, and the first device is a clothes treatment device. The controlling the floor cleaning device to operate comprises: controlling the floor cleaning device to continue performing the operation corresponding to the operation state; and controlling, subsequent to controlling the floor cleaning device to complete the operation corresponding to the operation state, the clothes treatment device to perform the operation corresponding to the operation request.

In an exemplary embodiment of the present disclosure, when the clothes treatment device needs to operate and the floor cleaning device is operating, and when the operation corresponding to the operation state of the floor cleaning device and the operation corresponding to the operation request of the clothes treatment device are interference operations, the operation time of the floor cleaning device is shorter than the operation time of the clothes treatment device. Thus, the floor cleaning device can be controlled to continue performing the operation. After the operation of the floor cleaning device is completed, the clothes treatment device is then controlled to perform the operation corresponding to the operation request. Accordingly, the floor cleaning device does not need to suspend performing the operation, such that the waiting time of the floor cleaning device is shortened, and the floor cleaning device can continue to perform a subsequent operation after performing the operation corresponding to the operation state, thereby improving the operation efficiency of the floor cleaning device.

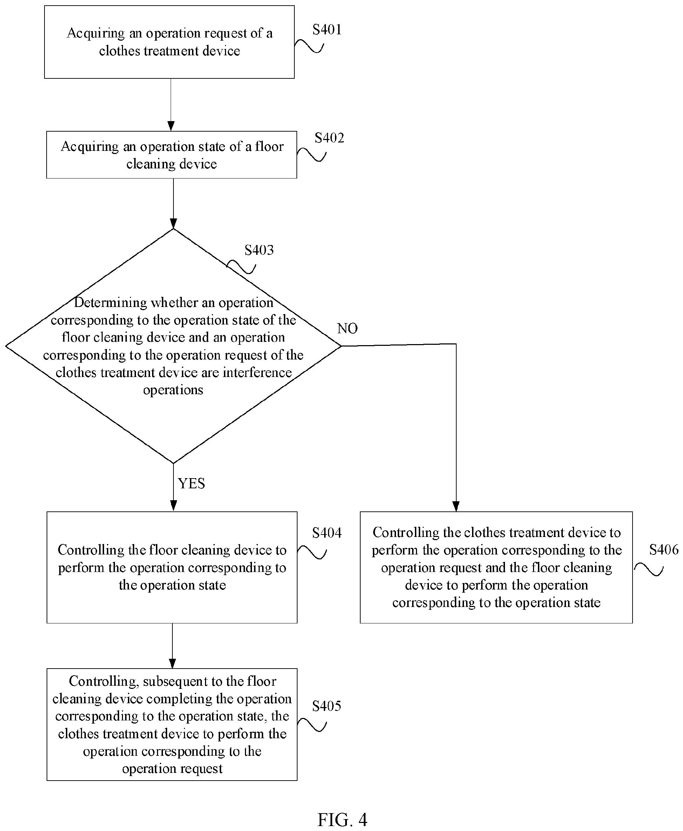

FIG. 4 is a detailed flowchart of a control method of a cleaning device according to an embodiment of the present disclosure. As shown in FIG. 4, the control method of the cleaning device comprises operations at blocks S401 to S406.

At block S401, an operation request of a clothes treatment device is acquired.

At block S402, an operation state of a floor cleaning device is acquired.

At block S403, it is determined whether an operation corresponding to the operation state of the clothes treatment device and an operation corresponding to the operation request of the floor cleaning device are interference operations. If so, an operation at block S404 is performed, and if not, an operation at block S406 is performed.

At block S404, the floor cleaning device is controlled to perform the operation corresponding to the operation state.

At block S405, after the floor cleaning device completes the operation corresponding to the operation state, the clothes treatment device is controlled to perform the operation corresponding to the operation request.

At block S406, the floor cleaning device is controlled to perform the operation corresponding to the operation request, and the clothes treatment device is controlled to perform the operation corresponding to the operation state.

It should to be noted that when the operation corresponding to the operation state of the second device and the operation corresponding to the operation request of the first device are not interference operations, the operations at block S406 may be performed correspondingly, or the process may be performed in accordance with a predetermined procedure of the cleaning device, which will not be limited herein by the embodiments of the present disclosure.

In another exemplary embodiment of the present disclosure, the determining that the operation corresponding to the operation state of the second device and the operation corresponding to the operation request of the first device are interference operations comprises determining that a total operation power of an operation power corresponding to the operation request and an operation power corresponding to the operation state is greater than a predetermined power.

In an exemplary embodiment of the present disclosure, when the total operation power of the operation power corresponding to the operation request of the first device and the operation power corresponding to the operation state of the second device is too high and is greater than a predetermined power, if the first device and the second device are set to operation simultaneously, the socket for supplying power to the first device and the second device cannot satisfy the operation power requirements of the first device and the second device, reducing the operation efficiency of the cleaning device, and even presenting a problem of power supply danger. Therefore, when the total operation power of the operation power corresponding to the operation request of the first device and the operation power corresponding to the operation state of the second device is greater than the predetermined power, the floor cleaning device is controlled to operate. After the floor cleaning device completes the operation thereof, the clothes treatment device is controlled to operate, to avoid the problem of mutual interference when the first device and the second device operate simultaneously.

In another exemplary embodiment of the present disclosure, the determining that the operation corresponding to the operation state of the second device and the operation corresponding to the operation request of the first device are interference operations comprises determining that an operation stage corresponding to the operation state of the second device and an operation stage corresponding to the operation request of the first device are interference operation stages.

In an embodiment, the first device is a floor cleaning device, and the second device is a clothes treatment device. The clothes treatment device may have a plurality of operation stages, which may comprise, for example, a soaking stage, a washing stage, a rinsing stage, and a spin-drying stage. The floor cleaning device may also have a plurality of operation stages, which may comprise, for example, a floor cleaning stage, a washing stage, and a charging stage. The spin-drying stage of the clothes treatment device and the charging stage of the floor cleaning device may be pre-set as interference operation stages, and an operation stage corresponding to the operation state of the clothes treatment device and an operation stage corresponding to the operation request of the floor cleaning device are acquired. If the operation stage corresponding to the operation state of the clothes treatment device is the spin-drying stage and the operation stage corresponding to the operation state of the floor cleaning device is the charging stage, it is determined that the operation stage corresponding to the operation state of the second device and the operation stage corresponding to the operation request of the first device are interference stages.

In some embodiments, if the operation stage corresponding to the operation state of the clothes treatment device is a soaking operation, and the operation stage corresponding to the operation request of the floor cleaning device is a charging operation, the clothes treatment device does not generate vibration during soaking to affect the charging contact of the floor cleaning device. In this case, it is determined that the operation corresponding to the operation state of the second device and the operation corresponding to the operation request of the first device are not interfere operations, and the first device and the second device can be controlled to operation simultaneously, or the process may also be performed in accordance with a predetermined procedure, which will not be limited herein by the embodiments of the present disclosure.

In another exemplary embodiment of the present disclosure, the first device is a floor cleaning device, and the second device is a clothes treatment device. An operation stage corresponding to the operation request of the first device is a charging stage, and an operation stage corresponding to the operation request of the second device is a spin-drying stage. In a further embodiment, the second device is a floor cleaning device, and the first device is a clothes treatment device. An operation stage corresponding to the operation request of the first device is a spin-drying stage, and an operation stage corresponding to the operation request of the second device is a charging stage.

In an embodiment, when the floor cleaning device needs to enter the base station for charging, a charging contact point is provided in the base station. After the floor cleaning device enters the base station, a charging contact point of the floor cleaning device is in contact with the charging contact point of the base station to perform charging. When the clothes treatment device is in the spin-drying stage, a rotating speed of an internal drum of the clothes treatment device is relatively fast, the vibration degree of the clothes treatment device is relatively great, and the relatively great vibration degree of the clothes treatment device is prone to result in the scenario that the floor cleaning device cannot achieve docking with the charging contact point in the base station, and even cause an electrical safety problem. In this case, it can be determined that the spin-drying operation of the floor cleaning device and the charging operation of the floor cleaning device are interference operations.

In another exemplary embodiment of the present disclosure, the operation stage corresponding to the operation request of the first device and the operation stage corresponding to the operation request of the second device are both heating stages.

In an embodiment, the first device is a floor cleaning device, and the second device is a clothes treatment device. The floor cleaning device needs to perform heating. When the clothes treatment device is performing a heating operation, the heating operation of the clothes treatment device requires power supply at a high power, and thus the power supply power at home cannot satisfy the situation that the clothes treatment device performs heating and drying operations and the floor cleaning device performs heating operation simultaneously. In this case, it is determined that the heating stage of the second device and the heating stage of the first device are interference operation stages.

According to an embodiment of the present disclosure, one of the first device and the second device is a floor cleaning device, and another one of the first device and the second device is a clothes treatment device. When it is determined that an operation corresponding to the operation request of the first device and an operation corresponding to the operation state of the second device are interference operations, the floor cleaning device is controlled to operate, and then the clothes treatment device is controlled to operate, to avoid the problem that the operation process of the clothes treatment device and the operation process of the floor cleaning device interfere with each other when the clothes treatment device and the floor cleaning device simultaneously perform the interference operations.

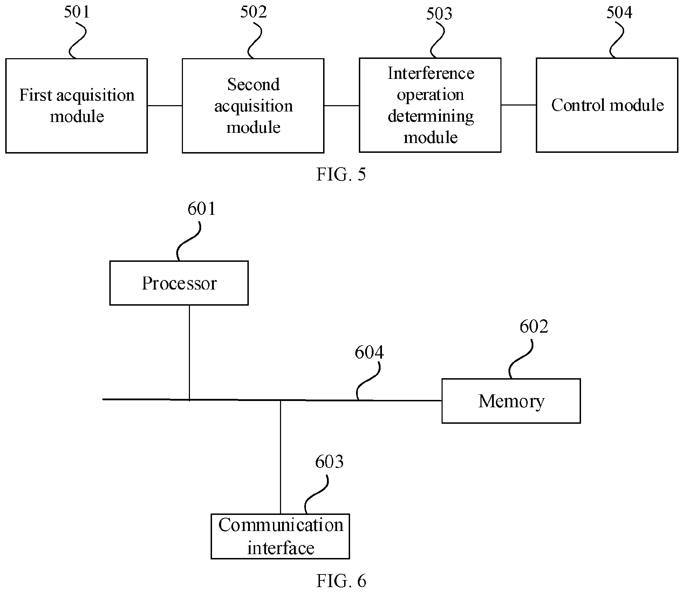

An embodiment of the present disclosure also provides a control apparatus of a cleaning device. FIG. 5 is a schematic diagram showing a structure of a control apparatus according to an embodiment of the present disclosure. As shown in FIG. 5, the control apparatus of the cleaning device comprises: a first acquisition module 501, a second acquisition module 502, a determining module 503, and a control module 504. The cleaning device comprises a first device and a second device, one of the first device and the second device is a floor cleaning device, and another one of the first device and the second device is a clothes treatment device. The first acquisition module 501 is configured to acquire an operation request of the first device. The second acquisition module 502 is configured to acquire an operation state of the second device. The interference operation determining module 503 is configured to determine that an operation corresponding to the operation state of the second device and an operation corresponding to the operation request of the first device are interference operations. The control module 504 is configured to control the floor cleaning device to operate, in response to the operation corresponding to the operation state of the second device and the operation corresponding to the operation request of the first device being the interference operations.

The apparatus provided by the above embodiments of the present disclosure and the method provided by the embodiments of the present disclosure share the same inventive concept and have the same beneficial effects, and will not be described herein.

An embodiment of the present disclosure also provides a computer-readable storage medium having programs or instructions stored thereon. The programs or instructions cause a computer to perform any one of the methods provided in the above embodiments.

In some embodiments, the computer-executable instructions may be configured to perform, when being executed by a computer processor, a technical solution of any one of the above-described methods of the embodiments of the present disclosure and achieve corresponding beneficial effects.

From the above description of embodiments, it will be clear to those skilled in the art that the present disclosure may be implemented by means of software and necessary general-purpose hardware, but also may be implemented by means of hardware. The former is a better implementation mode in many cases. Based on such understanding, essential parts of the technical solutions of the present disclosure or a part of the technical solutions that contributes to the related art can be embodied in a form of a software product, which can be stored on a computer-readable storage medium, such as a floppy disk, a Read-Only Memory (ROM), a Random Access Memory (RAM), a flash, a hard disk, or an optical disk of a computer. The computer-readable storage medium comprises instructions to cause a computer device (which may be a personal computer, a server, a network device, or the like) to perform the method of various embodiments of the present disclosure.

An embodiment of the present disclosure also provides a cleaning device on the basis of the above-mentioned embodiments. FIG. 6 is a schematic diagram showing a structure of a cleaning device according to an embodiment of the present disclosure. As shown in FIG. 6, the cleaning device comprises a processor 601 and a memory 602. The processor 601 is configured to perform, when invoking programs or instructions stored in the memory 602, the method according to the above embodiments, and thus has the advantageous effects of the above-described embodiments, which will not be described in detail herein.

In an exemplary embodiment of the present disclosure, as shown in FIG. 6, the cleaning device may comprise at least one processor 601, at least one memory 602, and at least one communication interface 603. The various assemblies of the cleaning device are coupled together through a bus system 604. The communication interface 603 is configured to transmit information with an external device. As can be appreciated, the bus system 604 is configured to enable connection communication between these assemblies. The bus system 604 comprises a power bus, a control bus, and a status signal bus except for a data bus. For the clarity of illustration, however, the various buses are labeled as the bus system 604 in FIG. 6.

It could be understood that the memory 602 in this embodiment may be either volatile memory or nonvolatile memory, or may comprise both volatile and nonvolatile memory. In some embodiments, the memory 602 stores the following elements: executable units or data structures, or subsets thereof, or extended sets of operating systems and applications thereof. In an embodiment of the present disclosure, the processor 601 is configured to perform, when invoking programs or instructions stored in the memory 602, the method according to the embodiments of the present disclosure.

The method of the embodiments of the present disclosure may be applied to or implemented by the processor 601. The processor 601 may be an integrated circuit chip with a signal processing capability. In an implementation process, the blocks of the method as described above may be completed by an integrated logic circuit in hardware or instructions in software in the processor 601. The processor 601 mentioned above may be a general-purpose processor, a Digital Signal Processor (DSP), an Application Specific Integrated Circuit (ASIC), a Field Programmable Gate Array (FPGA), or other programmable logic devices, discrete gate, or transistor logic devices, or discrete hardware assemblies. A general-purpose processor may be a microprocessor, or the processor may be any common processor.

The steps of the method in the embodiments of the present disclosure may be performed directly by a hardware decoding processor, or by a combination of hardware and software units in the decoding processor. A software unit may be located in a random access memory, a flash memory, a read-only memory, a programmable read-only memory, an electrically erasable programmable memory, a register, or other storage media well known in the art. The storage medium is located in the memory 602. The processor 601 reads the information in the memory 602, and is in combination with the hardware thereof to complete the steps of the above method.

The cleaning device may comprise one physical component or a plurality of physical components in accordance with instructions generated by the processor 601 in performing the method of the embodiments of the present disclosure. Different physical components may be provided inside the cleaning device or outside the cleaning device, and may be a cloud server or the like. Various physical components cooperate with the processor 601 and memory 602 to implement the operations of the cleaning device in this embodiment.

FIG. 2 exemplarily shows a front view of a cleaning device. As shown in FIG. 2, the cleaning device comprises a first device 1 (e.g., a clothes treatment device) and a second device 2 (e.g., a floor cleaning device). The floor cleaning device comprises a base station and a mobile cleaning part, and the base station of the floor cleaning device is integrated at the bottom of the clothes treatment device. The base station has a receiving cavity for receiving the mobile cleaning part, e.g., a robot cleaner. The mobile cleaning part is capable of carrying out operations in the receiving cavity, such as charging, fluid supplementation, or washing. A water tank is provided in the base station, and the water tank of the base station is configured to store water. According to the embodiments of the present disclosure, when it is determined that an operation corresponding to the operation request of the first device 1 and an operation corresponding to the operation state of the second device 2 are interference operations, the floor cleaning device is controlled to operate, and the clothes treatment device is then controlled to operate, to avoid the problem that the operation process of the clothes treatment device and the operation process of the floor cleaning device interfere with each other when the clothes treatment device and the floor cleaning device simultaneously perform the interference operations.

It should to be noted that the relational terms, such as "first" and "second," are used only to distinguish one entity or operation from another entity or operation without necessarily requiring or implying any such actual relationship or order between such entities or operations. Furthermore, the terms "comprising," "containing," or any other variation thereof are intended to cover non-exclusive inclusion, such that a process, a method, an article, or a device that comprises a list of elements does not comprise only those elements, but may comprise other elements not expressly listed or inherent to such process, method, article, or device. Without further limitation, the elements limited by the statement "comprising one..." do not exclude the existence of other identical elements in the process, method, article, or device that comprises the said elements.

The above is only the specific embodiments of the present disclosure, which enables those skilled in the art to understand or implement the present disclosure. Various modifications to these embodiments will be readily apparent to those skilled in the art, and the generic principles defined herein may be implemented in other embodiments without departing from the spirit or scope of the present disclosure. Therefore, the present disclosure is not intended to be limited to the embodiments described herein, but is to conform to the widest range consistent with the principles and novel features disclosed herein.

### Industrial Applicability

A cleaning device provided by the present disclosure comprises a first device and a second device, one of the first device and the second device is a floor cleaning device, and another one of the first device and the second device is a clothes treatment device. The control method of the cleaning device comprises acquiring an operation request of the first device; acquiring an operation state of the second device; determining that an operation corresponding to the operation state of the second device and an operation corresponding to the operation request of the first device are interference operations; and controlling the floor cleaning device to operate. Accordingly, in the present disclosure, one of the first device and the second device is a floor cleaning device, and another one of the first device and the second device is a clothes treatment device. When it is determined that an operation corresponding to the operation request of the first device and an operation corresponding to the operation state of the second device are interference operations, the floor cleaning device is controlled to operate, to avoid the problem that the operation process of the clothes treatment device and the operation process of the floor cleaning device interfere with each other when the clothes treatment device and the floor cleaning device simultaneously perform the interference operations, thereby improving the operation efficiency of the cleaning device and offering strong industrial practicality.

## Claims

1. A control method of a cleaning device, the cleaning device comprising a first device and a second device, one of the first device and the second device being a floor cleaning device, and an other one of the first device and the second device being a clothes treatment device, the control method comprising:
acquiring an operation request of the first device;
acquiring an operation state of the second device;
determining that an operation corresponding to the operation state of the second device and an operation corresponding to the operation request of the first device are interference operations; and
controlling the floor cleaning device to operate.

2. The control method according to claim 1, wherein the first device is the floor cleaning device;
the second device is the clothes treatment device; and
said controlling the floor cleaning device to operate comprises:
controlling the clothes treatment device to suspend performing the operation corresponding to the operation state, and controlling the floor cleaning device to perform the operation corresponding to the operation request; and
controlling, subsequent to the floor cleaning device completing the operation corresponding to the operation request, the clothes treatment device to continue to perform the operation corresponding to the operation state.

3. The control method according to claim 1, wherein the second device is the floor cleaning device;
the first device is the clothes treatment device; and
said controlling the floor cleaning device to operate comprises:
controlling the floor cleaning device to continue performing the operation corresponding to the operation state; and
controlling, subsequent to controlling the floor cleaning device to complete the operation corresponding to the operation state, the clothes treatment device to perform the operation corresponding to the operation request.

4. The control method according to claim 1, wherein said determining that the operation corresponding to the operation state of the second device and the operation corresponding to the operation request of the first device are interference operations comprises:
determining that a total operation power of an operation power corresponding to the operation request and an operation power corresponding to the operation state is greater than a predetermined power.

5. The control method according to claim 1, wherein said determining that the operation corresponding to the operation state of the second device and the operation corresponding to the operation request of the first device are interference operations comprises:
determining that an operation stage corresponding to the operation state of the second device and an operation stage corresponding to the operation request of the first device are interference operation stages.

6. The control method according to claim 5, wherein the first device is the floor cleaning device and the second device is the clothes treatment device, wherein the operation stage corresponding to the operation request of the first device is a charging stage, and wherein the operation stage corresponding to the operation request of the second device is a spin-drying stage; or
the second device is the floor cleaning device and the first device is the clothes treatment device, wherein the operation stage corresponding to the operation request of the first device is a spin-drying stage, and wherein the operation stage corresponding to the operation request of the second device is a charging stage.

7. The control method according to claim 5, wherein the operation stage corresponding to the operation request of the first device and the operation stage corresponding to the operation request of the second device are both heating stages.

8. A control apparatus of a cleaning device, the cleaning device comprising a first device and a second device, one of the first device and the second device is a floor cleaning device, and an other one of the first device and the second device is a clothes treatment device, the control apparatus comprising:
a first acquisition module configured to acquire an operation request of the first device;
a second acquisition module configured to acquire an operation state of the second device;
an interference operation determining module configured to determine whether an operation corresponding to the operation state of the second device and an operation corresponding to the operation request of the first device are interference operations; and
a control module configured to control the floor cleaning device to operate, in response to the operation corresponding to the operation state of the second device and the operation corresponding to the operation request of the first device being the interference operations.

9. A computer-readable storage medium, having a program or an instruction stored thereon, wherein the program or instruction causes a computer to perform a control method according to any one of claims 1 to 7.

10. A cleaning device, comprising a processor and a memory, wherein the processor is configured to perform, when invoking a program or an instruction stored in the memory, a control method according to any one of claims 1 to 7.
